# EUROPÄISCHE PATENTSCHRIFT

(11) **EP 2 736 743 B1**
(45) Veröffentlichungstag und Bekanntmachung des Hinweises auf die Patenterteilung: **04.07.2018**
(21) Anmeldenummer: 12740488.7
(22) Anmeldetag: 13.07.2012
(51) Int. Cl.: B60J 7/02

(54) **FÜHRUNGSEINRICHTUNG FÜR WENIGSTENS EIN VERSTELLBARES ELEMENT EINES KRAFTWAGENS**
GUIDING DEVICE FOR AT LEAST ONE ADJUSTABLE ELEMENT OF A VEHICLE
DISPOSITIF DE GUIDAGE POUR AU MOINS UN ÉLÉMENT RÉGLABLE DE VÉHICULE

(30) Priorität: 30.07.2011 DE 102011109042
(43) Veröffentlichungstag der Anmeldung: 04.06.2014
(73) Patentinhaber: Daimler AG, 70327 Stuttgart (DE)
(72) Erfinder: KOBER, Peer-Olaf, 71120 Grafenau (DE); SCHRADER, Jürgen, 71093 Weil im Schönbuch (DE)
(74) Vertreter: JENSEN & SON
(86) Internationale Anmeldenummer: PCT/EP2012/002963
(87) Internationale Veröffentlichungsnummer: WO 2013/017199

(56) Entgegenhaltungen:
- DE-A1- 3 817 391
- DE-C1- 4 336 222

## Beschreibung

Die Erfindung betrifft eine Führungseinrichtung für wenigstens ein verstellbares Element, insbesondere eines Schiebe- und/oder Hebedachs, eines Kraftwagens gemäß dem Oberbegriff von Patentanspruch 1. Eine solche Führungseinrichtung ist aus DE 3817391 A bekannt. Derartige Führungseinrichtungen werden im Serienfahrzeugbau von Personenkraftwagen als sogenannte Kulissenführungen bei Schiebe- und/oder Hebedächern eingesetzt. Entlang dieser Kulissenführungen, welche üblicherweise jeweils senkrecht zu den korrespondierenden Endbereichen des wenigstens einen verstellbaren Elements angeordnet sind, wird dieses beispielsweise aus einer Schließstellung in eine entsprechende Offenstellung geführt.

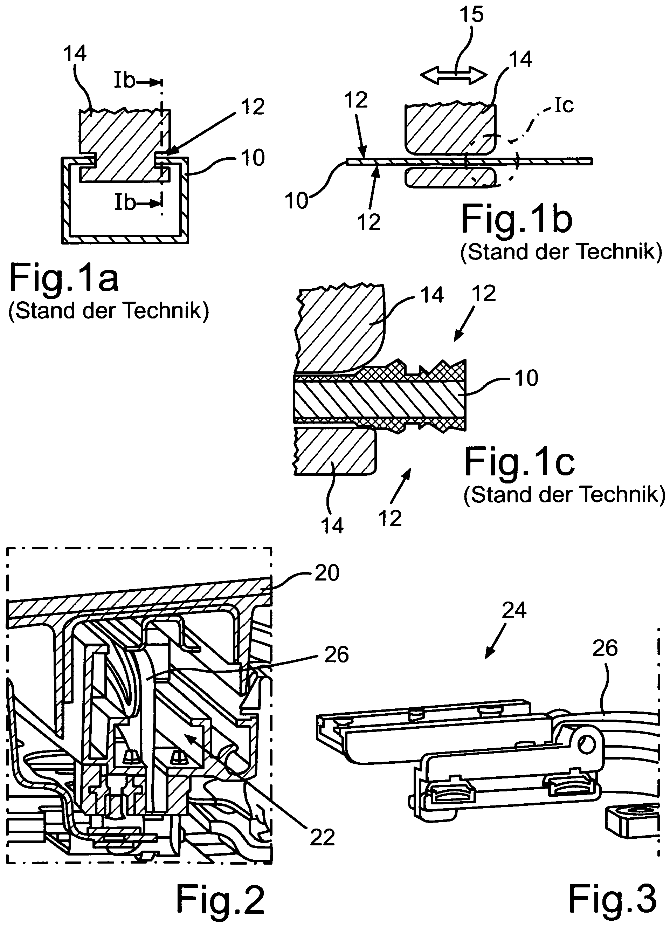

Ein Beispiel der Führungseinrichtung ist in den Fig. 1a, 1b und 1c schematisch erläutert. Fig. 1a zeigt dabei in einer Vorderansicht ein Profil einer Gleitschiene 10, entlang deren Gleitbahn 12 ein korrespondierendes Gleitelement 14 beispielsweise unter Verwendung eines Zugmittels bewegbar ist. Ein vorliegend nicht erkennbares verstellbares Element, beispielsweise ein Deckelelement eines Schiebe- und/oder Hebedachs, welches fest mit dem Gleitelement 14 verbunden oder an diesem entsprechend gelagert ist, wird hierdurch entsprechend verstellt. Fig. 1b zeigt dabei in einer schematischen Schnittansicht entlang einer durch die Linie lb - lb in Fig. 1a repräsentierten Schnittebene die Führungseinrichtung schematisch in einer ausschnittsweisen Seitenansicht, wobei insbesondere erkennbar wird, in welcher Weise das Gleitelement 14 entlang der korrespondierenden Gleitbahn 12 der Gleitschiene 10 bewegt wird.

Wie aus Fig. 1c erkennbar ist, die in ausschnittsweiser Vergrößerung das Detail lc in Fig. 1b zeigt, gibt es bei derartigen Systemen oftmals Probleme, wenn die Gleitbahn 10 mit Staub oder dgl. Schmutz verunreinigt ist. Insbesondere sollte die Kraft zur Bewegung des verstellbaren Elements und die Spielfreiheit der Führung, welche sich gegebenenfalls in einer entsprechenden Geräuschentwicklung äußert, möglichst gering sein. Verstärkt wird dieses Problem durch die Abnutzung der jeweiligen Gleitbahnen. Hierdurch können nämlich Reib- und Klappergeräusche entstehen.

Aufgabe der vorliegenden Erfindung ist es daher, eine Führungseinrichtung der eingangs genannten Art zu schaffen, bei welcher die Probleme der Abnutzung und Verschmutzung der Gleitbahnen deutlich reduziert sind.

Diese Aufgabe wird erfindungsgemäß durch eine Führungseinrichtung mit den Merkmalen des Patentanspruchs 1 gelöst. Vorteilhafte Ausgestaltungen mit zweckmäßigen Weiterbildungen sind in den abhängigen Patentansprüchen angegeben.

Um eine Führungseinrichtung der eingangs genannten Art zu schaffen, welche im Hinblick auf die Abnutzung und Verschmutzung der wenigstens einen Gleitbahn der Gleitschiene verbesserte Eigenschaften aufweist, ist erfindungsgemäß wenigstens ein Servicegleitelement vorgesehen, welches entlang der Gleitbahn der korrespondierenden Gleitschiene zu bewegen ist. Mit anderen Worten ist erfindungsgemäß wenigstens ein weiteres Gleitelement in Form eines Servicegleitelements vorgesehen, welches mit dem einen oder den mehreren Gleitelementen zur Verstellung des verstellbaren Elements beispielsweise des Schiebe- und/oder Hebedachs ebenfalls entlang der Gleitbahn der Gleitschiene verstellt werden kann. Der Zweck dieses Servicegleitelements ist es dabei unter anderem, Verunreinigungen wie Staub oder dergleichen von der Oberfläche der Gleitbahn aufzunehmen bzw. zu entfernen, sowie gegebenenfalls die entsprechende Gleitbahn mit einem Gleit- und/oder Reinigungsmittel zu versehen. Durch diese Reinigung und/oder Schmierung der Gleitbahn wird demzufolge insgesamt erreicht, dass die Verschiebekraft zur Verstellung des wenigstens einen verstellbaren Elements möglichst gering bleibt und Reib- und Klappergeräusche beim Verstellen des wenigstens einen verstellbaren Elements zumindest weitestgehend unterbleiben. Gemäß der Erfindung wird das Servicegleitelement bei der Bewegung des wenigstens einen Gleitelements mitbewegt wird. Dies kann in einfachster Ausführung dadurch erfolgen, dass das Servicegleitelement mit dem wenigstens einen Gleitelement über ein Verbindungselement verbunden ist. Natürlich wäre es auch denkbar, dass das Servicegleitelement lediglich bei der Bewegung des wenigstens einen Gleitelements von diesem mitverschoben bzw. vor sich hergeschoben wird. Hierzu ist dann noch nicht einmal ein Verbindungselement erforderlich. Insgesamt ist jedoch erkennbar, dass durch die Mitbewegung des Servicegleitelements mit dem Gleitelement eine einfache Möglichkeit zur Bewegung des Servicegleitelements geschaffen ist.

In weiterer Ausgestaltung der Erfindung hat es sich als vorteilhaft gezeigt, wenn jeweils ein Servicegleitelement bezogen auf die jeweilige Bewegungsrichtung des korrespondierenden Gleitelements vor diesem angeordnet ist. Somit ist jeweils ein Servicegleitelement vorgesehen, welches die Gleitbahn reinigt, bevor das wenigstens eine Gleitelement entlang dieser Gleitbahn bewegt wird.

Eine weitere vorteilhafte Ausführungsform sieht vor, dass das Servicegleitelement zumindest bereichsweise drucksteif und biegeweich ausgebildet ist. Durch diese entsprechend elastische Ausführung ist auf besonders gute Weise gewährleistet, dass die entsprechende Gleitbahn besonders sauber durch das Servicegleitelement gereinigt werden kann. Gemäß der Erfindung ist es vorgesehen, dass das zumindest bereichsweise aus einem elastischen Material geschaffene Servicegleitelement an seiner Oberfläche zur Aufnahme eines Gleit- und/oder Reinigungsmittels ausgebildet ist. Hierzu kann das Servicegleitelement insbesondere zumindest bereichsweise aus einem Filzmaterial gebildet sein. Durch ein solches Gleit- und/oder Reinigungsmittel ergibt sich eine weiter verbesserte Reinigung und/oder Schmierung der entsprechenden Gleitbahn.

Schließlich hat sich eine besonders vorteilhafte Ausführungsform der Führungseinrichtung dadurch ergeben, dass das Servicegleitelement in das ohnehin vorhandene wenigstens eine Gleitelement zur Verstellung des verstellbaren Elements integriert ist. Hierdurch ergeben sich eine besonders bauraumsparende Anordnung sowie eine einfache Möglichkeit zur Bewegung des Servicegleitelements.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1a, 1b, 1c: eine geschnittene und schematische Vorderansicht, eine geschnittene und schematische Seitenansicht entlang einer durch die Linie lb - lb in Fig. 1a symbolisierten Schnittebene, sowie eine ausschnittsweise vergrößerte Darstellung des Details lc in Fig. lb auf eine Führungseinrichtung für wenigstens ein verstellbares Element eines Schiebe- und/oder Hebedachs eines Kraftwagens gemäß dem Stand der Technik;
- Fig. 2: eine ausschnittsweise Perspektivansicht auf eine Führungseinrichtung für wenigstens ein verstellbares Element eines Schiebe- und/oder Hebedachs eines Kraftwagens gemäß der Erfindung mit wenigstens einer Gleitschiene, entlang deren Gleitbahn wenigstens ein Gleitelement zur Verstellung des Elements des Schiebe- und/oder Hebedachs bewegbar ist, wobei wenigstens ein Servicegleitelement vorgesehen ist, welches entlang der Gleitbahn der korrespondierenden Gleitschienen bewegbar ist;
- Fig. 3: eine ausschnittsweise Perspektivansicht auf das entlang der korrespondierenden Gleitbahn der entsprechenden Gleitschienen bewegbaren Gleitelements;

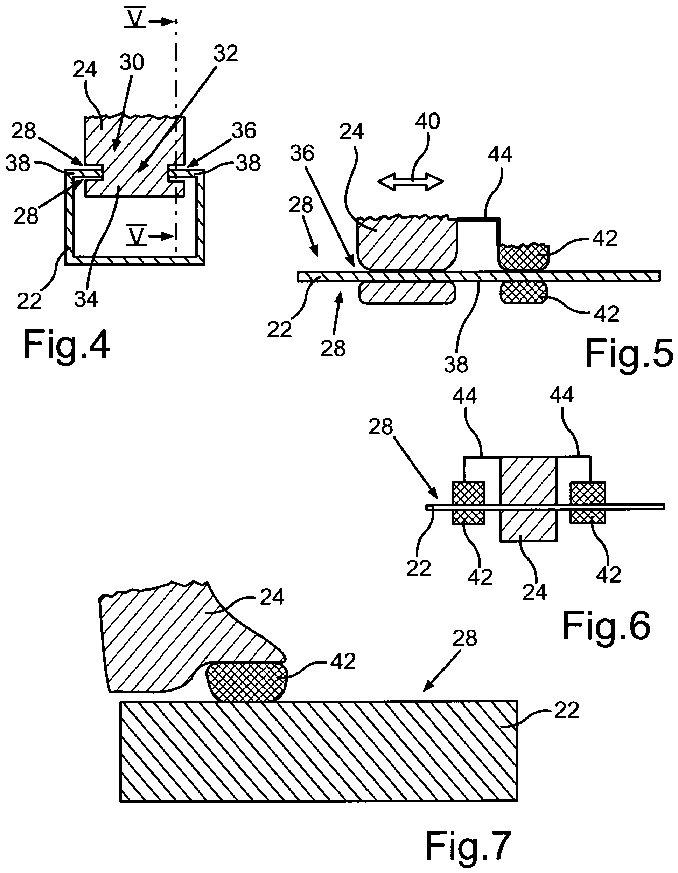

- Fig. 4: eine ausschnittsweise und schematische geschnittene Vorderansicht auf die Gleitschiene der erfindungsgemäßen Führungseinrichtung, entlang deren Gleitbahn das korrespondierende Gleitelement bewegbar ist;
- Fig. 5: eine ausschnittsweise und schematische geschnittene Seitenansicht durch das entlang der Gleitschiene bewegbare Gleitelement entlang einer durch die Linie V - V in Fig. 4 repräsentierten Schnittebene, wobei in Fig. 5 außerdem ein Servicegleitelement erkennbar ist, welches entlang der Gleitbahn der korrespondierenden Gleitschiene gemeinsam mit dem Gleitelement bewegbar ist;
- Fig. 6: eine ausschnittsweise und schematische Seitenansicht auf ein entlang einer Gleitbahn einer Gleitschiene bewegbares Gleitelement analog zur Ausführungsform gemäß den Fig. 4 und 5, wobei vorliegend jeweils ein Servicegleitelement bezogen auf die jeweiligen Bewegungsrichtungen vor dem korrespondierenden Gleitelement angeordnet ist; und in
- Fig. 7: eine ausschnittsweise vergrößerte geschnittene Seitenansicht auf ein bereichsweise erkennbares, entlang einer Gleitschiene bewegbares Gleitelement mit einem Servicegleitelement, welches in das Gleitelement integriert ist.

Während in den Fig. 1a, 1b und 1c eine Führungseinrichtung gemäß dem Stand der Technik gezeigt ist, soll im Weiteren anhand der Fig. 2 bis 7 eine Führungseinrichtung für wenigstens ein verstellbares Element, insbesondere eines Schiebe- und/oder Hebedachs, eines Personenkraftwagens in diversen Ausführungsformen erläutert werden.

Hierzu zeigt zunächst Fig. 2 in einer ausschnittsweisen und geschnittenen Perspektivansicht eine Führungseinrichtung für ein verstellbares Element 20 in Form eines Deckelelements eines Schiebe- und/oder Hebedachs eines Personenkraftwagens. Das verstellbare Element 20 in Form des Deckelelements ist dabei beispielsweise entlang von zwei parallel zueinander verlaufenden Gleitschienen 22 verstellbar, von welchen vorliegend eine der beiden Gleitschienen 22 erkennbar ist. Diese Gleitschienen 22 verlaufen beispielsweise am seitlichen Rand einer entsprechenden Dachöffnung des Schiebe- und/oder Hebedachs.

In Zusammenschau mit Fig. 3 wird erkennbar, dass durch diese Gleitschiene 22 ein entsprechendes Gleitelement 24 geführt ist, welches entlang der Gleitschiene 22 mittels eines Zugbandes 26 oder eines andersartigen Zugmittels, beispielsweise eines Bowdenzuges, zu bewegen ist. Hierbei sind verschiedenste Arten von Antrieben denkbar, mittels welchen das jeweilige Gleitelement 24 entlang der korrespondierenden Gleitschiene 22 bewegt werden kann.

Die Fig. 4 und 5 zeigen im Weiteren in einer ausschnittsweisen und schematischen, geschnittenen Vorderansicht bzw. einer ausschnittsweisen und schematischen, geschnittenen Seitenansicht entlang einer durch die Linie V - V in Fig. 4 repräsentierten Schnittebene ein Ausführungsbeispiel einer solchen Führungseinrichtung anhand eines Gleitelements 24, welches entlang einer Gleitbahn 28 der entsprechenden Gleitschiene 22 bewegt werden kann. Wie insbesondere aus Fig. 4 erkennbar ist, weist die korrespondierende Gleitschiene 22 einen im Wesentlichen rechteckförmigen Hohlquerschnitt auf, wobei eine Breitseite 30 dieses Profils mit einem Schlitz 32 versehen ist, in welchen das Gleitelement 24 mit einem etwa T-förmigen Fuß 34 eingreift. Durch diesen T-förmigen Fuß 34 sind innerhalb des Gleitelements 24 zwei Nuten 36 ausgebildet, in welche jeweilige Schenkel 38 der Breitseite 30 des Profils der Gleitschiene 22 eingreifen. Diese Schenkel 38 bilden mithin auch die Gleitbahn 28 der Gleitschiene 22, entlang welcher das Gleitelement 24 gleitend bewegt werden kann.

Wie nun anhand von Fig. 5 mit einem Doppelpfeil 40 angedeutet ist, kann das Gleitelement 24 mittels eines nicht gezeigten Zugbandes 26 in beiden Richtungen entlang der Gleitbahn 28 der Gleitschiene 22 bewegt werden. Hierbei entsteht jedoch die Problematik, dass auf der entsprechenden Gleitbahn 28 der Gleitschiene 22, welche im vorliegenden Fall durch die jeweiligen Ober- bzw. Unterseiten der beiden Schenkel 38 gebildet wird, entsprechend Schmutz, Staub oder andere Verunreinigungen sammeln können. Gerade bei gleitgeführten Schiebesystemen wie beispielsweise Schiebedächern kann es dabei zu Problemen bzw. zu einer Erhöhung der Verschiebekraft kommen, sowie zu Problemen der Spielfreiheit der Führung. Verstärkt werden kann dieses Problem durch eine entsprechende Abnutzung der Gleitbahn 28 infolge der Verschmutzung, wobei es zu Beanstandungen bezüglich Reib- und Klappergeräuschen kommen kann.

Aus diesem Grund ist vorliegend auf einer Seite des Gleitelements 24 ein Servicegleitelement 42 vorgesehen, welches ebenfalls entlang der Gleitbahn 28 bewegt werden kann. Das Gleitelement 42 ist im vorliegenden Fall so ausgebildet, dass es die Gleitbahn 28 der Gleitschiene 22 sowohl auf der Oberseite wie auch auf der Unterseite der jeweiligen Schenkel 38 entsprechend reinigen und/oder schmieren kann.

Prinzipiell ist es dabei denkbar, dass das Servicegleitelement 42 unabhängig von dem daneben bzw. davor/dahinter angeordneten Gleitelement 24 bewegt werden kann. Im vorliegenden Ausführungsbeispiel gemäß den Fig. 4 und 5 ist das Servicegleitelement 42 jedoch bei der Bewegung des Gleitelements 24 mit diesem mitbewegbar. Hierzu ist das Servicegleitelement 42 über ein festes Verbindungselement 44, beispielsweise einem entsprechenden Bügel, mit dem Gleitelement 24 verbunden.

Das Servicegleitelement 42 selbst ist zumindest bereichsweise drucksteif und biegeweich ausgebildet. Es besteht vorliegend zumindest bereichsweise aus einem elastischen Material, welches beispielsweise an seiner jeweiligen, dem entsprechenden Schenkel 38 der Gleitschiene 22 zugewandten Oberfläche aus einem porösen Material besteht, welches mit einem Gleit- und/oder Reinigungsmittel bzw. Schmiermittel getränkt oder dergleichen versehen werden kann. Ein solches poröses Material kann beispielsweise ein Filzmaterial sein, welches einerseits entsprechend elastisch ist und andererseits gut zur Aufnahme eines entsprechenden Gleit- und/oder Reinigungsmittels geeignet ist. Es ist klar, dass durch das Bewegen des Servicegleitelements 42 die korrespondierende Gleitbahn 28 sauber und/oder geschmiert gehalten wird. Mit der porösen Oberfläche beispielsweise des Filzmaterials des Servicegleitelements 42 ist es zudem möglich, entsprechenden Staub oder dergleichen Verunreinigungen aufzunehmen.

Fig. 6 zeigt dabei in einer ausschnittsweisen und schematischen, geschnittenen Seitenansicht eine Abwandlung der Ausführungsform gemäß Fig. 5, welche sich von dieser dadurch unterscheidet, dass bezogen auf die jeweiligen beiden Bewegungsrichtungen jeweils ein Servicegleitelement 42 vor dem korrespondierenden Gleitelement 24 angeordnet ist. Unabhängig von der Bewegungsrichtung des Gleitelements 24 ist demzufolge bei dieser Ausführungsform stets ein Servicegleitelement 42 vor dem Gleitelement 24 angeordnet, so dass immer die entsprechende Gleitbahn 28 der korrespondierenden Gleitschiene 22 gereinigt wird, bevor das Gleitelement 24 entlang der Gleitbahn 28 gleitet. Hierdurch wird eine entsprechend günstige Gleitverschiebung des entsprechenden Gleitelements 24 und letztendlich auch des verstellbaren Elements 20, beispielsweise des entsprechenden Schiebe- und/oder Hebedachs des Kraftwagens, erreicht.

In Fig. 7 ist schließlich in einer ausschnittsweisen und vergrößerten schematischen Ansicht eine weitere Ausführungsform der Führungseinrichtung gezeigt, bei welcher das Servicegleitelement 42 in das Gleitelement integriert ist. Dies hat den Vorteil, dass auf ein Verbindungselement 44, wie dies bei den Ausführungsformen gemäß den Fig. 5 und 6 erforderlich ist, verzichtet werden kann.

Insgesamt ist somit erkennbar, dass mit der vorliegenden Führungseinrichtung ein nahezu wartungsfreies Führungssystem für Schiebedächer und ähnliche integrierte Führungssysteme wie beispielsweise Spoilerdächer mit hohen Führungskräften geschaffen werden kann, wobei insbesondere durch die hohe Schmiermittelqualität hohe Führungskräfte zur Verstellung der jeweiligen verstellbaren Elemente 20 möglich sind.

In diesem Zusammenhang sei nochmals erwähnt, dass die vorliegende Führungseinrichtung nicht auf Schiebe- und/oder Hebedächer von Kraftwagen beschränkt ist, sondern für alle verstellbaren Elementen, welche entlang von jeweiligen Gleitschienen 22 mittels von einem oder mehreren Gleitelementen 24 verschiebbar geführte Elemente 20 aufweisen, geeignet ist.

## Patentansprüche

1. Führungseinrichtung für wenigstens ein verstellbares Element (20), insbesondere eines Schiebe- und/oder Hebedachs, eines Kraftwagens, mit wenigstens einer Gleitschiene (22), entlang deren Gleitbahn (28) wenigstens ein erstes Gleitelement (24) zur Verstellung des Elements (20) bewegbar ist,
**dadurch gekennzeichnet, dass**
wenigstens ein weiteres Gleitelement in Form eines Servicegleitelements (42) vorgesehen ist, welches bei der Bewegung des ersten Gleitelements (24) entlang der Gleitbahn (28) der korrespondierenden Gleitschiene (22) mitbewegbar ist, wobei das Servicegleitelement (42) zumindest bereichsweise aus einem elastischen Material und an seiner Oberfläche zur Aufnahme eines Gleit- und/oder Reinigungsmittels ausgebildet ist.

2. Führungseinrichtung nach Anspruch 1, oder 2
**dadurch gekennzeichnet, dass**
das Servicegleitelement (42) über ein festes Verbindungselement (44) mit dem ersten Gleitelement (24) verbunden ist.

3. Führungseinrichtung nach einem der vorhergehenden Ansprüche,
**dadurch gekennzeichnet, dass**
jeweils ein Servicegleitelement (42) bezogen auf die jeweiligen Bewegungsrichtungen vor dem korrespondierenden ersten Gleitelement (24) angeordnet ist.

4. Führungseinrichtung nach einem der vorhergehenden Ansprüche,
**dadurch gekennzeichnet, dass**
das Servicegleitelement (42) zumindest bereichsweise drucksteif und biegeweich ausgebildet ist.

5. Führungseinrichtung nach einem der vorhergehenden Ansprüche,
**dadurch gekennzeichnet, dass**
das Servicegleitelement (42) zumindest bereichsweise aus einem Filzmaterial gebildet ist.

6. Führungseinrichtung nach einem der vorhergehenden Ansprüche,
**dadurch gekennzeichnet, dass**
das Servicegleitelement (42) zumindest bereichsweise mit einem Gleit- und/oder Reinigungsmittel versehen ist.

7. Führungseinrichtung nach einem der vorhergehenden Ansprüche,
**dadurch gekennzeichnet, dass**
das Servicegleitelement (42) in das erste Gleitelement (24) integriert ist.

## Claims

1. Guiding device for at least one adjustable element (20), in particular a sliding and/or lifting roof, of a motor vehicle, comprising at least one sliding rail (22), along the sliding track (28) of which at least one first sliding element (24) is movable for adjusting the element (20),
**characterised in that**
at least one further sliding element in the form of a service sliding element (42) is provided, which can be moved along the sliding track (28) of the corresponding sliding rail (22) together with the movement of the first sliding element (24), wherein at least some areas of the service sliding element (42) are made of an elastic material and its surface is designed for the accommodation of a lubricant and/or cleaning agent.

2. Guiding device according to claim 1 or 2,
**characterised in that**
the service sliding element (42) is joined to the first sliding element (24) via a fixed connecting element (44).

3. Guiding device according to any of the preceding claims,
**characterised in that**
one service sliding element (42) each is arranged in front of the corresponding first sliding element (24) relative to the respective directions of movement.

4. Guiding device according to any of the preceding claims,
**characterised in that**
at least some areas of the service sliding element (42) are designed to be compression-rigid and flexible.

5. Guiding device according to any of the preceding claims,
**characterised in that**
at least some areas of the service sliding element (42) are made of a felt material.

6. Guiding device according to any of the preceding claims,
**characterised in that**
at least some areas of the service sliding element (42) are provided with a lubricant and/or cleaning agent.

7. Guiding device according to any of the preceding claims,
**characterised in that**
the service sliding element (42) is integrated into the first sliding element (24).

## Revendications

1. Dispositif de guidage pour au moins un élément réglable (20), en particulier un toit ouvrant et/ou relevable, d'un véhicule automobile, comprenant au moins un rail coulissant (22), au moins un premier élément coulissant (24) destiné à régler l'élément (20) pouvant se déplacer le long de sa glissière (28), **caractérisé en ce qu'**au moins un autre élément coulissant est conçu sous la forme d'un élément coulissant d'entretien (42), qui peut se déplacer conjointement lorsque le premier élément coulissant (24) se déplace le long de la glissière (28) des rails coulissants (22) correspondants, l'élément coulissant d'entretien (42) étant conçu à partir d'un matériau élastique et destiné à recevoir sur sa surface un moyen de nettoyage et/ou coulissant.

2. Dispositif de guidage selon la revendication 1 ou 2, **caractérisé en ce que** l'élément coulissant d'entretien (42) est relié par un élément de liaison fixe (44) au premier élément coulissant (24).

3. Dispositif de guidage selon l'une quelconque des revendications précédentes, **caractérisé en ce que** chaque élément coulissant d'entretien (42) est disposé par rapport aux directions de déplacement respectives avant le premier élément coulissant (24) correspondant.

4. Dispositif de guidage selon l'une quelconque des revendications précédentes, **caractérisé en ce que** l'élément coulissant d'entretien (42) est souple et résistant à la pression au moins à certains endroits.

5. Dispositif de guidage selon l'une quelconque des revendications précédentes, **caractérisé en ce que** l'élément coulissant d'entretien (42) est conçu à partir d'un matériau en feutre au moins à certains endroits.

6. Dispositif de guidage selon l'une quelconque des revendications précédentes, **caractérisé en ce que** l'élément coulissant d'entretien (42) est pourvu au moins à certains endroits d'un moyen de nettoyage et/ou coulissant.

7. Dispositif de guidage selon l'une quelconque des revendications précédentes, **caractérisé en ce que** l'élément coulissant d'entretien (42) est intégré dans le premier élément coulissant (24).
